# EUROPEAN PATENT SPECIFICATION

(11) **EP 1 610 227 B1**
(45) Date of publication and mention of the grant of the patent: **13.02.2008**
(21) Application number: 04258051.4
(22) Date of filing: 22.12.2004
(51) Int. Cl.: G06F 15/78

(54) **Reconfigurable processor with configuration cache and semiconductor device**
Rekonfigurierbarer Prozessor mit einem Konfigurations-Cache sowie Halbleiterbaustein
Processeur reconfigurable avec cache de configuration et dispositif semi-conductuer

(30) Priority: 24.06.2004 JP 2004186398
(43) Date of publication of application: 28.12.2005
(73) Proprietor: FUJITSU LIMITED, Kawasaki-shi, Kanagawa 211-8588 (JP)
(72) Inventor: Kasama, Ichiro, Fujitsu Limited, Kawasaki-shi, Kanagawa 211-8588 (JP)
(74) Representative: Stebbing, Timothy Charles

(56) References cited:
- WO-A-03/025782
- GB-A- 2 304 438
- US-A- 5 742 180
- AMANO H ET AL: "A DYNAMICALLY ADAPTIVE HARDWARE ON DYNAMICALLY RECONFIGURABLE PROCESSOR" IEICE TRANSACTIONS ON COMMUNICATIONS, INSTITUTE OF ELECTRONICS INFORMATION AND COMM. ENG. TOKYO, JP, vol. E86-B, no. 12, December 2003 (2003-12), pages 3385-3391, XP001191542 ISSN: 0916-8516
- ENZLER R; PLESSL C; PLATZNER M: "Co-simulation of a hybrid multi-context architecture" INTERNATIONAL CONFERENCE ON ENGINEERING OF RECONFIGURABLE SYSTEMS AND ALGORITHMS - ERSA'03, June 2003 (2003-06), pages 174-180, XP002349309 ISBN: 1-932415-05
- SHIBATA Y ET AL: "A virtual hardware system on a dynamically reconfigurable logic device" FIELD-PROGRAMMABLE CUSTOM COMPUTING MACHINES, 2000 IEEE SYMPOSIUM ON NAPA VALLEY, CA, USA 17-19 APRIL 2000, LOS ALAMITOS, CA, USA,IEEE COMPUT. SOC, US, 17 April 2000 (2000-04-17), pages 295-296, XP010531952 ISBN: 0-7695-0871-5

## Description

This invention relates to a processor and a semiconductor device, and more particularly to a processor and a semiconductor device that include reconfigurable processing circuits for performing predetermined processing. Here, "processor" denotes any kind of information processing device.

Conventionally, there has been proposed a processor comprising a CPU (Central Processing Unit) and additional processing circuitry in the form of a reconfigurable composite unit of multiple functional units. This processor analyzes a program described e.g. in the C language and divides the program into portions to be processed by the CPU and portions to be processed by the composite unit of multiple functional units, to thereby execute the program at high speed.

VLIW (Very Long Instruction Word) or superscalar processors incorporate a plurality of functional units, and process a single data flow using the functional units. Therefore, these processors have very rigid operational connections among the functional units. In contrast, reconfigurable processors have a group of functional units connected as in a simple pipeline or connected by a dedicated bus with a certain degree of freedom secured therefor, so as to enable a plurality of data flows to be processed. In the reconfigurable processors, it is of key importance how configuration data for determining the configuration of the functional unit group (composite unit) is transferred for operations of the functional units.

A condition for switching the configuration of the composite unit of multiple functional units is generated e.g. when the functional units of the composite unit perform a certain computation and the result of the computation matches a predetermined condition. The switching of the configuration of the composite unit of multiple functional units is controlled by the CPU of the processor. The processor has a plurality of banks (caches) for storing configuration data, and achieves instantaneous switching of the configuration of the composite unit by switching between the caches (see e.g. International Publication No. WO01/016711 (Japanese Patent Application No. 2001-520598)).

It should be noted that there has also been proposed a processor which is capable of measuring the performance of modules for executing various processes and that of the processor itself, and changing the configuration of the modules or the processor based on the results of the measurement to thereby set a configuration suitable to execute a program which is instructed by a user (see e.g. Japanese Unexamined Patent Publication (Kokai) No. 2002-163150).

However, in the above-described conventional processor, the caches are controlled by middleware for the CPU (i.e. a function of the CPU), and therefore there is a problem that it is necessary for a user to set the storage of configuration data in the caches, on a program in advance.

'A Dynamically Adaptive Hardware on Dynamically Reconfigurable Processor', Amano et al, IEICE Transactions on Communications, Institute of Electronics Information and Comm. Eng., Tokyo, vol. E86-B, no. 12, December 2003, pages 3385 to 3391, proposes a framework of a dynamically adaptive hardware mechanism on multicontext reconfigurable devices. It discloses an adaptive switching fabric implemented on NEC's reconfigurable device DRP (Dynamically Reconfigurable Processor).

'Co-simulation of a Hybrid Multi-Context Architecture', Enzler et al, International Conference on Engineering of Reconfigurable Systems and Algorithms, ERSA, June 2003, pages 174-180, discloses a co-simulation environment in which design trade-offs for hybrid multi-context architectures are investigated.

The above problem is solved according to the independent claims.

In a first aspect of the present invention, there is provided a processor that includes reconfigurable processing circuits for performing predetermined processing. This processor further comprises a cache for storing a plurality of configuration data, the configuration data containing circuit information defining the configuration of the reconfigurable processing circuits and cache operation information defining the operation of the cache; a selector for selecting current configuration data from said plurality of configuration data; a cache operation information acquisition section for acquiring cache operation information from configuration data that is currently selected; and a cache control section for controlling the operation of the cache storing the configuration data, based on the cache operation information.

In a second aspect of the present invention, there is provided a semiconductor device that includes such a processor.

The above and other features and advantages of the present invention will become apparent from the following description when taken in conjunction with the accompanying drawings which illustrate preferred embodiments of the present invention by way of example, and in which:
FIG. 1 is a block diagram useful in explaining the principles of a processor embodying the present invention;
FIG. 2 is a schematic block diagram showing the processor;
FIG. 3 is a block diagram showing a sequence section and a processing circuit group appearing in FIG. 2;
FIG. 4 is a block diagram showing details of the sequence section in FIG. 3;
FIG. 5 is a block diagram showing further details of the sequence section in FIG. 4;
FIG. 6 is a block diagram showing details of an operation-determining section appearing in FIG. 5;
FIGS. 7A and 7B are diagrams useful in explaining configuration data, in which:

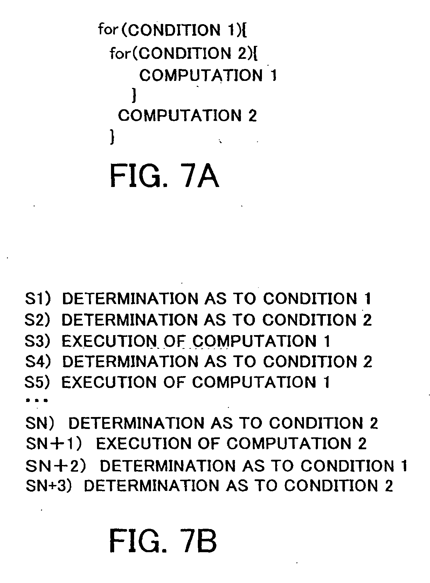

FIG. 7A shows an example of a program; and
FIG. 7B shows a flow of processing operations of the program;

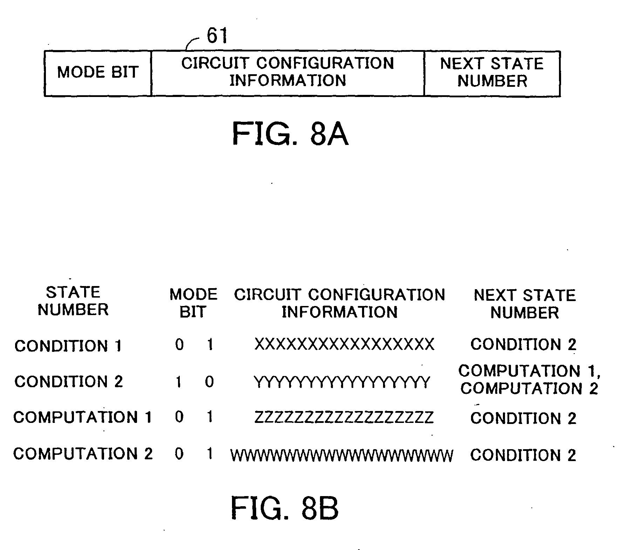

FIG. 8A is a diagram showing an example of a data format of configuration data; and
FIG. 8B is a diagram showing an example of the data.

The present invention provides a processor and a semiconductor device in which a compiler is capable of determining storage of configuration data in caches.

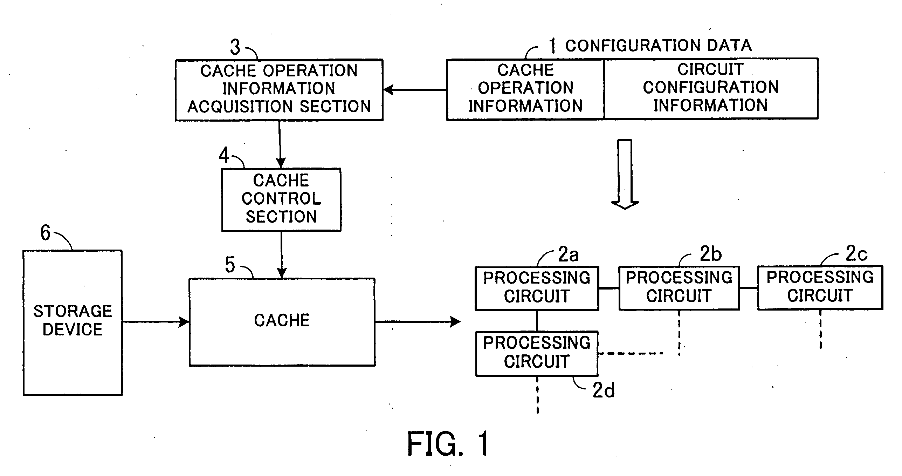

Hereafter, the principles of the present invention will be described in detail with reference to FIG. 1.

FIG. 1 is a diagram useful in explaining the principles of a processor embodying the present invention.

The processor shown in FIG. 1 includes reconfigurable processing circuits 2a, 2b, 2c, 2d, ... for performing predetermined processing, and may execute a program. The processor is comprised of a cache operation information acquisition section 3, a cache control section 4, a cache 5, and a storage device 6. It should be noted that the storage device 6 may be provided outside the processor. Further, FIG. 1 also shows configuration data 1.

The configuration data 1 contains circuit configuration information defining the configuration of the reconfigurable processing circuits 2a, 2b, 2c, 2d, ..., and cache operation information defining the operation of the cache 5.

The cache operation information acquisition section 3 acquires the cache operation information from the configuration data 1 to be executed.

The cache control section 4 controls the operation of the cache 5 using the configuration data 1, based on the cache operation information acquired by the cache operation information acquisition section 3. The storage device 6 and/or the cache 5 stores the configuration data 1, and hence, for example, the cache control section 4 controls whether the configuration data 1 is to be read out from the cache 5 or from the storage device 6. Further, the cache control section 4 may control the cache 5 such that the configuration data 1 read out from the storage device 6 is stored in the cache 5, if not already stored there.

As described above, according to the processor of Fig. 1, the configuration data is configured to contain the cache operation information, and the operation of the cache is controlled based on the cache operation information contained in the configuration data. With this configuration, a compiler is capable of causing the cache operation information to be contained in the configuration data, based on a prediction of the operation of the program, and to determine storage of the configuration data in the cache.

Next, a preferred embodiment of the present invention will be described in detail with reference to drawings.

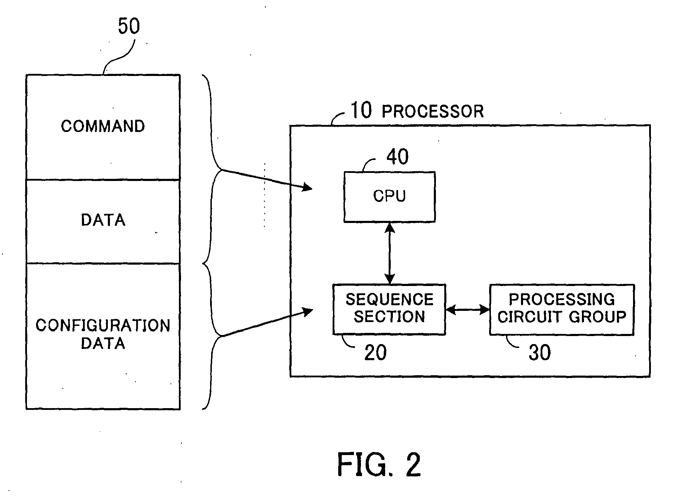

FIG. 2 is a schematic block diagram showing the processor.

As shown in FIG. 2, the processor 10 is comprised of a sequence section 20, a processing circuit group 30, and a CPU 40. The processor 10 is implemented e.g. by a one-chip semiconductor. It should be noted that FIG. 2 also shows a memory map 50 of a program to be executed by the processor 10.

As shown in the memory map 50, the program is divided into areas for commands and data to be executed by the CPU 40, and an area for configuration data, i.e. data of configuration to be executed by the sequence section 20 on the processing circuit group 30. The CPU 40 executes the program formed by the commands and data shown in the memory map 50, and the sequence section 20 configures the processing circuits of the processing circuit group 30 in a predetermined manner based on the configuration data shown in the memory map 50, for execution of the program.

The processing circuit group 30 will now be described-in detail.

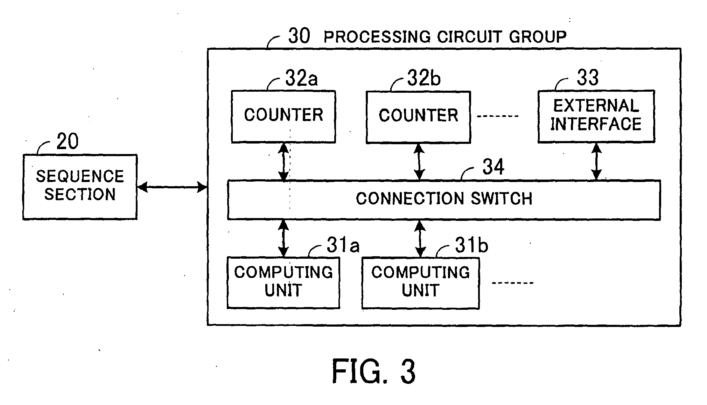

FIG. 3 is a block diagram showing the sequence section 20 and the processing circuit group 30 in FIG. 2.

As shown in FIG. 3, the processing circuit group 30 is comprised of processing circuits for carrying out predetermined processing, i.e. functional units 31a, 31b ..., counters 32a, 32b ..., an external interface 33, and a connection switch 34. It should be noted that the processing circuits shown in FIG. 3 are shown only by way of example, and the processing circuit group 30 may include storage devices, such as memories or registers.

The sequence section 20 outputs configuration data defining the configuration of the processing circuit group 30 to the processing circuit group 30, in a predetermined sequence. The processing circuit group 30 changes the configuration of the processing circuits based on the configuration data output from the sequence section 20, and fixes the configuration of the processing circuits. The processing circuits of the processing circuit group 30 change their operations and connections based on the configuration data output from the sequence section 20, to thereby change the configuration thereof and fix the same.

For example, the functional units 31a, 31b ..., the counters 32a, 32b ..., the external interface 33, and the connection switch 34 of the processing circuit group 30 change their operations based on the configuration data. Further, the connection switch 34 changes connections between the functional units 31a, 31b ..., the counters 32a, 32b ..., and the external interface 33 based on the configuration data.

The processing circuit group 30 executes computations of a program, and then outputs a switching condition signal to the sequence section 20 when a measure of the computations matches a predetermined condition. Let it be assumed that the processing circuit group 30 repeatedly performs a computation N times on data input via the external interface 33. The functional units 31a, 31b ... repeatedly process the input data, and the counter 32a counts up the number of times of the operation. When the count of the counter 32a reaches N, the counter 32a outputs the switching condition signal to the sequence section 20.

When receiving the switching condition signal, the sequence section 20 outputs configuration data to be executed next to the processing circuit group 30, and the processing circuit group 30 reconfigures the processing circuits based on the configuration data. Thus, the processing circuits for executing a user program are configured in the processing circuit group 30 for high-speed execution of the program.

Next, the sequence section 20 will be described in detail.

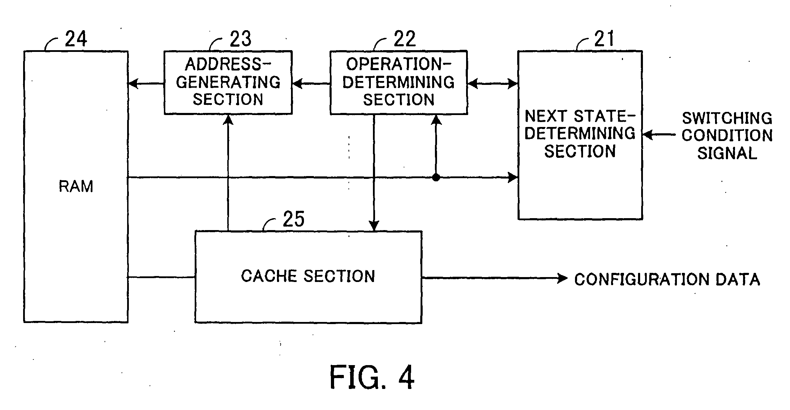

FIG. 4 is a block diagram showing details of the sequence section appearing in FIG. 3.

As shown in FIG. 4, the sequence section 20 is comprised of a next state-determining section 21, an operation-determining section 22, an address-generating section 23, a RAM (Random Access Memory) 24, and a cache section 25.

The next state-determining section 21 stores numbers (state numbers) indicative of configuration data (including a plurality of candidates) to be executed next. These state numbers are contained in configuration data, and the state number of configuration data to be executed next can be known by referring to configuration data currently being executed. Further, the next state-determining section 21 receives the switching condition signal from the processing circuit group 30 appearing in FIG. 3. The next state-determining section 21 determines a next state number associated with configuration data to be executed next, in response to satisfaction of the switching condition indicated by the switching condition signal.

The operation-determining section 22 stores an operation mode of configuration data currently being executed. The operation-determining section 22 controls operations of the cache section 25 according to the operation mode. The operation mode includes e.g. a simple cache mode in which configuration data previously cached in the cache section 25 is used, and a look-ahead mode in which configuration data of a next state number to be executed next is pre-read and stored in the cache section 25.

For example, in the simple cache mode, when the state number of configuration data to be executed is determined in response to the switching condition signal, the operation-determining section 22 determines whether the configuration data associated with the state number is stored in the cache section 25 (i.e. whether a cache hit occurs). If a cache hit occurs, the operation-determining section 22 controls the cache section 25 such that the configuration data is output from the cache section 25, whereas if no cache hit occurs, the operation-determining section 22 controls the address-generating section 23 such that the configuration data is output from the RAM 24. The configuration data output from the RAM 24 is delivered to the processing circuit group 30 via the cache section 25.

In the look-ahead mode, the operation-determining section 22 reads out a next state number stored in the next state-determining section 21, and determines whether a cache hit occurs as to configuration data associated with the next state number. If no cache hit occurs, the operation-determining section 22 reads out the configuration data from the RAM 24, and stores the same in the cache section 25 in advance, whereas if a cache hit occurs, the operation-determining section 22 controls the cache section 25 such that the configuration data is output therefrom. In the look-ahead mode, when processing of a program based on configuration data currently being executed takes a long time, candidate configuration data to be executed next is stored in the cache section 25 in advance during execution of the current program processing to thereby speed up program processing.

The address-generating section 23 receives a state number output from the operation-determining section 22 and a ready signal output from the cache section 25. The address-generating section 23 outputs the address of configuration data associated with the state number to the RAM 24 in response to the ready signal from the cache section 25.

The RAM 24 stores configuration data defining the configuration of the processing circuit group 30 in FIG. 3. The RAM 24 outputs the configuration data associated with the address received from the address-generating section 23 to the cache section 25, the operation-determining section 22, and the next state-determining section 21. It should be noted that configuration data contains a state number associated with configuration data to be executed next, as described hereinabove. Therefore, when the configuration data is output from the RAM 24, the next state-determining section 21 is informed of the state number associated with configuration data to be executed next. The operation-determining section 22 is aware of the operation mode of configuration data currently being executed.

The cache section 25 stores configuration data output from the RAM 24, under the control of the operation-determining section 22. Further, when the operation-determining section 22 determines that a cache hit occurs, the cache section 25 outputs cached configuration data associated with the cache hit to the processing circuit group 30. When a cache becomes free, the cache section 25 delivers to the address-generating section 23 a ready signal indicating that configuration data output from the RAM 24 can be written therein.

Next, the simple cache mode and the look-ahead mode will be described in detail. First, a description will be given of the simple cache mode.

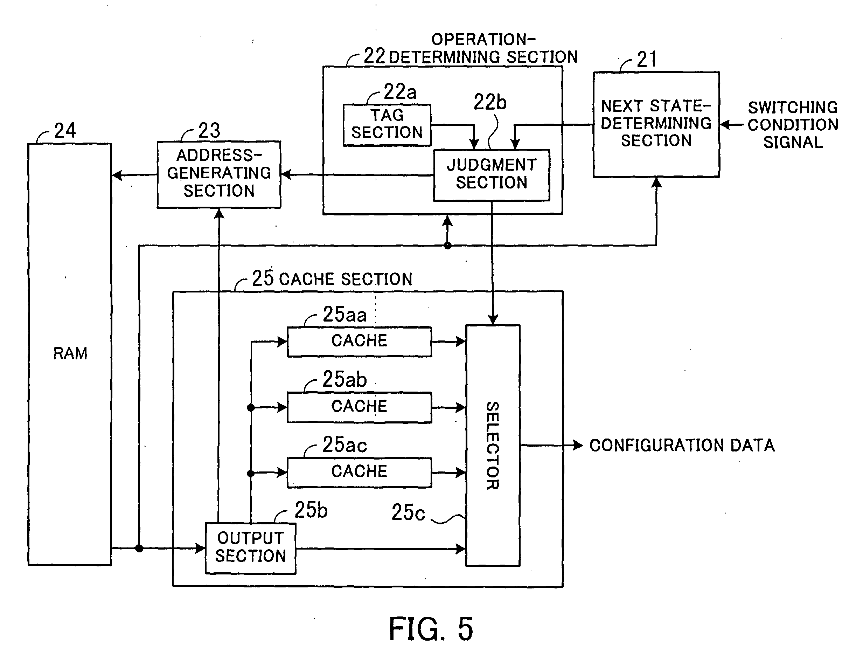

FIG. 5 is a block diagram showing further details of the sequence section in FIG. 4.

In FIG. 5, component elements identical to or equivalent to those shown in FIG. 4 are designated by the same reference numerals, and description thereof is omitted. As shown in FIG. 5, the operation-determining section 22 is comprised of a tag section 22a and a judgment section 22b. The cache section 25 is comprised of caches 25aa to 25ac, an output section 25b, and a selector 25c.

The tag section 22a of the operation-determining section 22 stores state numbers associated with configuration data stored in the caches 25aa to 25ac of the cache section 25. When configuration data output from the RAM 24 is stored in one of the caches 25aa to 25ac, the state number of the configuration data is stored in the tag section 22a.

The judgment section 22b compares a state number associated with configuration data to be executed, which is determined in response to a switching condition signal, with each of the state numbers stored in the tag section 22a. When there occurs matching of the state numbers (i.e. when a cache hit occurs), the judgment section 22b controls the selector 25c such that the configuration data stored in one of the caches 25aa to 25ac in association with the state number is output. When the matching of the state numbers does not occur, the judgment section 22b controls the address-generating section 23 to generate the address of the configuration data associated with the state number, and controls the selector 25c such that the configuration data is output from the RAM 24. More specifically, the judgment section 22b determines whether or not a cache hit occurs as to the configuration data to be executed, and when the cache hit occurs, the selector 25c is controlled such that the configuration data is output from one of the caches 25aa to 25ac storing the data, whereas when no cache hit occurs, the selector 25c is controlled such that the configuration data is output from the RAM 24.

Each of the caches 25aa to 25ac of the cache section 25 is a register that has the same bit width as that of configuration data and is implemented by flip-flops. For example, the caches 25aa to 25ac are formed by n (bit width of configuration data) x 3 (number of caches) flip-flops.

The output section 25b delivers configuration data output from the RAM 24 to one of the caches 25aa to 25ac and the selector 25c.

Now, it is assumed that the simple cache mode is further divided into two modes. In a first of these modes, when a cache hit does not occur, configuration data output from the RAM 24 is stored in one of the caches 25aa to 25ac. In the other mode, when no cache hit occurs, configuration data output from the RAM 24 is not stored in any one of the caches 25aa to 25ac.

In the first mode, the output section 25b stores configuration data output from the RAM 24 in one of the caches 25aa to 25ac, and outputs the same to the selector 25c. In the other mode, the output section 25b outputs the configuration data output from the RAM 24 to the selector 25c, without storing the same in any one of the caches 25aa to 25ac. By thus dividing the simple cache mode into two, it is possible to prevent rewriting of data in the caches 25aa to 25ac from being performed frequently, when no cache hit occurs.

It should be noted that new configuration data is stored in one of the caches 25aa to 25ac which stores the oldest configuration data or configuration data with a low cache hit rate.

The selector 25c selectively outputs configuration data output from the caches 25aa to 25ac and configuration data output from the RAM 24 via the output section 25b, under the control of the judgement section. The caches 25aa to 25ac are registers, as described hereinabove, which are in a state constantly outputting configuration data to the selector 25c. The selector 25c selectively outputs one of configuration data constantly output from the caches 25aa to 25ac and configuration data output from the output section 25b. The selector 25c outputs configuration data without designating the address of a cache, which enables high-speed delivery of configuration data.

In FIG. 5, let it be assumed that the state number of configuration data to be executed has been determined in response to the switching condition signal input to the next state-determining section 21, and that the operation mode of the configuration data of the state number is the simple cache mode.

The judgment section 22b of the operation-determining section 22 compares state numbers stored in the tag section 22a and the state number determined by the next state-determining section 21. If one of the stored state numbers matches the determined state number (i.e. if a cache hit occurs), the selector 25c is controlled to output configuration data of the matching state number from one of the caches 25aa to 25ac storing the data. If none of the stored state numbers in the tag section 22a match the determined state number, the address-generating section 23 is controlled to output the address of configuration data of the determined state number.

The RAM 24 delivers the configuration data associated with the address output from the address-generating section 23 to the output section 25b of the cache section 25. When the current simple cache mode is the aforementioned first mode, the output section 25b delivers the configuration data to both of one of the caches 25aa to 25ac and the selector 25c, whereas when the current simple cache mode is the other mode, the output section 25b delivers the configuration data to the selector 25c alone. The selector 25c delivers the configuration data output from the output section 25b to the processing circuit group 30 shown in FIG. 3. Operations for caching configuration data in the simple cache mode are thus executed.

Next, a description will be given of the look-ahead mode.

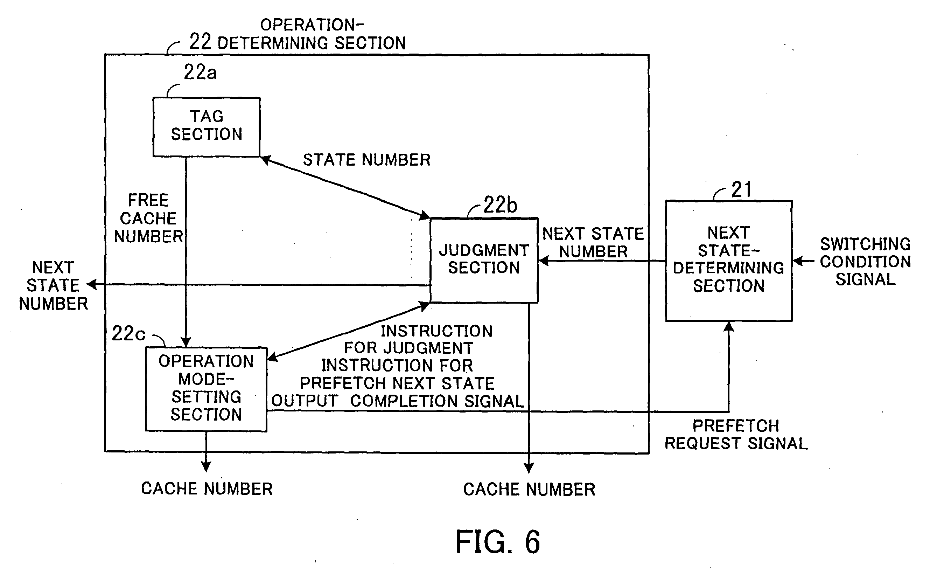

FIG. 6 is a block diagram showing details of the operation-determining section appearing in FIG. 5.

In performing cache operation in the look-ahead mode, the operation-determining section 22 is configured to have functional blocks shown in FIG. 6, that is, the tag section 22a, the judgment section 22b, and an operation mode-setting section 22c. It should be noted that FIG. 6 also shows the next state-determining section 21 appearing in FIG. 5.

When the operation mode of configuration data currently being executed is the look-ahead mode, the operation mode-setting section 22c outputs a prefetch request signal to the next state-determining section 21 so as to request the next state-determining section 21 to deliver a next state number stored therein for next processing, to the judgment section 22b. Further, the operation mode-setting section 22c instructs the judgment section 22b to perform a pre-fetch operation. Then, when the look-ahead operation is completed, the operation mode-setting section 22c outputs a next state output completion signal to the judgment section 22b.

The judgment section 22b compares state numbers stored in the tag section 22a and a next state number of configuration data to thereby determine whether the next configuration data is stored in any of the caches 25aa to 25ac. If one of the state numbers stored in the tag section 22a matches the required next state number, it can be judged that the configuration data to be used next is already stored in the one of the caches 25aa to 25ac, and therefore the operation mode-setting section 22c does nothing.

If no state number stored in the tag section 22a matches the next state number looking ahead, it can be judged that the configuration data required next is not stored in any of the caches 25aa to 25ac. Therefore, the operation mode-setting section 22c acquires a free cache number, and outputs the cache number acquired by the prefetch operation to the output section 25b. The judgment section 22b outputs the next state number to the address-generating section 23, and the RAM 24 outputs configuration data associated with the next state number to the output section 25b. The output section 25b stores the configuration data received from the RAM 24 in one of the caches 25aa to 25ac associated with the cache number received from the operation mode-setting section 22c. The judgment section 22b stores the next state number associated with the pre-read configuration data in the tag section 22a.

It should be noted that when configuration data to be used next is to be stored in one of the caches 25aa to 25ac, the output section 25b outputs the ready signal to the address-generating section 23, and in response to the ready signal, the address-generating section 23 outputs an address associated with a state number of configuration data to be prefetched, to the RAM 24.

When the next state number associated with configuration data to be executed next is determined in response to the switching condition signal, the judgment section 22b determines whether the configuration data associated with the next state number is stored in any of the caches 25aa to 25ac. If the configuration data is stored in one of the caches 25aa to 25ac, a cache number is output to the selector 25c. The selector 25c delivers the configuration data output from one of the caches 25aa to 25ac associated with the cache number to the processing circuit group 30.

In FIG. 6, when the operation mode of configuration data currently being executed is the look-ahead mode, the operation mode-setting section 22c outputs a prefetch request signal to the next state-determining section 21. The next state-determining section 21 outputs a next required state number to the judgment section 22b. Further, the operation mode-setting section 22c instructs the judgment section 22b to determine whether the corresponding configuration data is in a cache.

Thus, the judgment section 22b compares state numbers stored in the tag section 22a and the next state number (i.e. looks-ahead) to determine whether configuration data associated with the next state number looking ahead is stored in any of the caches 25aa to 25ac. The judgment section 22b outputs the result of the determination to the operation mode-setting section 22c.

When no cache hit occurs, the operation mode-setting section 22c operates such that the configuration data as to which no cache hit occurs is pre-read into one of the caches 25aa to 25ac. The operation for caching configuration data in the look-ahead mode is thus executed.

Next, a description will be given of configuration data and the operation modes.

FIGS. 7A and 7B are diagrams useful in explaining configuration data, in which FIG. 7A shows an example of the program, and FIG. 7B shows a flow of processing of the program.

The program shown in FIG. 7A is written in, for example, the C language, in which "for" statements are arranged in nested form. Each "for" statement instructs the processor to repeat subsequent instructions while the condition specified in the parentheses is true. The inner "for" loop executes "computation 1" until "condition 2" is satisfied. The outer "for" loop executes the inner loop process and "computation 2" while "condition 1" is true.

As shown in the flowchart shown in FIG. 7B, first, the program shown in FIG. 7A performs determination as to the condition 1 in a step S1, determination as to the condition 2 in a step S2, the computation 1 in a step S3, determination as to the condition 2 in a step S4, and the computation 1 in a step S5. Then, the program performs determination as to the condition 2 in a step SN (N: a positive integer), the computation 2 in a step SN+1, determination as to the condition 1 in a step SN+2, and determination as to the condition 2 in a step SN+3. This process is repeatedly carried out while the conditions 1 and 2 are true.

FIG. 8A is a diagram showing an example of the data format of configuration data, and FIG. 8B is a diagram showing an example of configuration data.

As shown in FIG. 8A, configuration data 61 is divided into an area for a mode bit, an area for circuit configuration information, and an area for a next state number associated with configuration data to be executed next.

The mode bit area stores information indicative of an operation mode. For example, each operation mode is represented by two bits as shown in FIG. 8B. The simple cache mode for caching configuration data previously read in is represented by (0, 1), while the look-ahead mode for pre-reading configuration data and storing it in one of the caches 25aa to 25ac is represented by (1, 0). It should be noted that the two operation modes are provided only by way of example, and more operation modes can be provided. For example, it is possible to provide an operation mode for caching configuration data continuously.

The circuit configuration information area stores information defining the configuration of the processing circuits of the processing circuit group 30 shown in FIG. 3. In other words, the circuit configuration of the processing circuit group 30 is determined by the circuit configuration information of the configuration data 61.

When the configuration data 61 is executed, the next state number area stores a next state number associated with configuration data to be executed next. For example, from the flow of processing shown in FIG. 7B, it is known that the state number of configuration data to be executed immediately after determination as to the condition 1 is a state number associated with the condition 2. Therefore, as shown in FIG. 8B, the mode bit of the configuration data associated with the condition 1 is set to the simple cache mode, and the state number associated with the condition 2 is stored in the next state number area. As a result, if configuration data associated with the state number of the condition 2 is stored in one of the caches 25aa to 25ac, a cache hit occurs.

From the flow of processing shown in FIG. 7B, it is known that the state number of configuration data to be executed immediately after determination as to the condition 2 is a state number associated with the computation 1 or 2. Therefore, as shown in FIG. 8B, the mode bit of the configuration data associated with the condition 2 is set to the look-ahead mode, and the state number associated with the computations 1 and 2 is stored in the next state number area. As a result, configuration data corresponding to the state number associated with the computations 1 and 2 is pre-read into one of the caches 25aa to 25ac.

Then, the computation 1 or 2 is carried out in response to the switching condition signal. In this case, since the configuration data associated with the computations 1 and 2 has been pre-read into associated ones of the caches 25aa to 25ac, the processing circuit group 30 can be configured at high speed whichever of the computations 1 and 2 is executed, without accessing the RAM 24, irrespective of the result of the condition 2.

As described above, configuration data is configured to store information of an operation mode of a cache, and cache operation is controlled according to the operation mode. This enables a compiler to determine storage of the configuration data into a cache within a range of prediction on operations of a program that can be analyzed by the compiler:

More specifically, the compiler is capable of grasping through analysis of the program what process is to be executed and hence is capable of performing cache judgment automatically on a predetermined process repeatedly carried out, e.g. by a loop description, to thereby add an operation mode thereto. Therefore, a user can obtain optimal performance without consciously designating the operation mode.

A portion which is not subjected to cache judgment by the compiler can be controlled by the user. This is achieved e.g. by operating the mode bit of compiled configuration data 61.

It should be noted that cache operation can be forcibly locked and unlocked by control of the CPU 40. Further, continuous execution of cache operations can be stopped by control of the CPU 40. It is also possible to lock and unlock configuration data stored in all or only a part of the caches 25aa to 25ac. Furthermore, configuration data can be forcibly stored in the caches 25aa to 25ac.

For example, a control area for the above-mentioned settings by the CPU 40 is provided in a part of the configuration data area of the memory map 50 shown in FIG. 2. When the CPU 40 stores predetermined setting data in the control area, the sequence section 20 controls cache operation according to the setting data in the control area. For example, all or a part of the caches 25aa to 25ac described above are/is locked. The caches 25aa to 25ac are thus configured to be controlled by the CPU 40, whereby contents of the caches 25aa to 25ac can be checked e.g. during debugging.

According to a processor embodying the present invention, configuration data is configured to contain cache operation information, and cache operation is controlled based on the cache operation information contained in configuration data. This enables the compiler to store cache operation information in configuration data based on a prediction on operations of a program, and determine storage of the configuration data in a cache.

The foregoing is considered as illustrative only of the principles of the present invention. Further, since numerous modifications and changes will readily occur to those skilled in the art, it is not desired to limit the invention to the exact construction and applications shown and described, and accordingly, the invention includes all suitable modifications falling within the scope of the appended claims.

## Claims

1. A processor that includes reconfigurable processing circuits (2a, 2b, 2c, 2d) for performing predetermined processing, **characterised by** comprising:
a cache (5) for storing a plurality of configuration data (1), the configuration data containing circuit information defining the configuration of the reconfigurable processing circuits (2a, 2b, 2c, 2d) and cache operation information defining the operation of the cache (5);
a selector (25c) for selecting current configuration data from said plurality of configuration data;
a cache operation information acquisition section (3) for acquiring cache operation information from configuration data (1) that is currently selected; and
a cache control section (4) for controlling the operation of the cache (5) storing the configuration data, based on the cache operation information.

2. The processor according to claim 1, wherein the configuration data (1) further contains next state information indicative of which configuration data should be selected next, and
wherein when the cache operation information indicates a look-ahead operation, said cache control section (4) pre-reads the configuration data indicated by the next state information, and controls the operation of the cache (5).

3. The processor according to claim 1 or 2, wherein the cache (25) comprises a plurality of registers (25aa, 25ab, 25ac).

4. The processor according to claim 3, wherein the selector (25c) is operable under control of said cache control section (4) to select the configuration data (1) from configuration data output from the plurality of registers (25aa, 25ab, 25ac) and deliver the selected configuration data to the processing circuits (2a, 2b, 2c, 2d).

5. The processor according to claim 3 or 4, wherein the registers (25aa, 25ab, 25ac) comprise flip-flops.

6. The processor according to any prceeding claim, wherein storage of the configuration data (1) in the cache is controlled by a central processing unit (40).

7. The processor according to any preceeding claim, wherein the cache operation information contains information indicative of whether or not the configuration data (1) as to which no cache hit occurs should be stored in the cache (5).

8. A semiconductor device including the processor according to any of claims 1 to 7.

## Patentansprüche

1. Prozessor, der rekonfigurierbare Verarbeitungsschaltungen (2a, 2b, 2c, 2d) zum Ausführen einer vorbestimmten Verarbeitung enthält, **dadurch gekennzeichnet, dass** er umfasst:
einen Cache (5) zum Speichern einer Vielzahl von Konfigurationsdaten (1), welche Konfigurationsdaten Schaltungsinformationen enthalten, die die Konfiguration der rekonfigurierbaren Verarbeitungsschaltungen (2a, 2b, 2c, 2d) definieren, und Cacheoperationsinformationen, die die Operation des Cache (5) definieren;
einen Selektor (25c) zum Selektieren von gegenwärtigen Konfigurationsdaten von der Vielzahl von Konfigurationsdaten;
eine Cacheoperationsinformationserfassungssektion (3) zum Erfassen von Cacheoperationsinformationen von Konfigurationsdaten (1), die gegenwärtig selektiert sind; und
eine Cachesteuersektion (4) zum Steuern der Operation des Cache (5), der die Konfigurationsdaten speichert, auf der Basis der Cacheoperationsinformationen.

2. Prozessor nach Anspruch 1, bei dem die Konfigurationsdaten (1) ferner nächste Zustandsinformationen enthalten, die angeben, welche Konfigurationsdaten als nächste selektiert werden sollen, und
bei dem dann, wenn die Cacheoperationsinformationen eine Vorgriffsoperation angeben, die Cachesteuersektion (4) die Konfigurationsdaten, die durch die nächsten Zustandsinformationen angegeben werden, im Voraus liest und die Operation des Cache (5) steuert.

3. Prozessor nach Anspruch 1 oder 2, bei dem der Cache (25) eine Vielzahl von Registern (25aa, 25ab, 25ac) umfasst.

4. Prozessor nach Anspruch 3, bei dem der Selektor (25c) unter der Steuerung der Cachesteuersektion (4) betriebsfähig ist, um die Konfigurationsdaten (1) von Konfigurationsdaten zu selektieren, die von der Vielzahl von Registern (25aa, 25ab, 25ac) ausgegeben werden, und die selektierten Konfigurationsdaten den Verarbeitungsschaltungen (2a, 2b, 2c, 2d) zuzuführen.

5. Prozessor nach Anspruch 3 oder 4, bei dem die Register (25aa, 25ab, 25ac) Flipflops umfassen.

6. Prozessor nach irgendeinem vorhergehenden Anspruch, bei dem das Speichern der Konfigurationsdaten (1) in dem Cache durch eine zentrale Verarbeitungseinheit (40) gesteuert wird.

7. Prozessor nach irgendeinem vorhergehenden Anspruch, bei dem die Cacheoperationsinformationen Informationen enthalten, die angeben, ob die Konfigurationsdaten (1), die keinen Cache-Treffer ergeben, in dem Cache (5) gespeichert werden sollen oder nicht.

8. Halbleitervorrichtung, die den Prozessor nach irgendeinem der Ansprüche 1 bis 7 enthält.

## Revendications

1. Processeur qui comprend des circuits de traitement reconfigurables (2a, 2b, 2c, 2d) destinés à exécuter un traitement prédéterminé, **caractérisé en ce qu'**il comprend :
une mémoire cache (5) destinée à stocker une pluralité de données de configuration (1), les données de configuration contenant des informations de circuit définissant la configuration des circuits de traitement reconfigurables (2a, 2b, 2c, 2d) et informations de fonctionnement de mémoire cache définissant le fonctionnement de la mémoire cache (5) ;
un sélecteur (25c) destiné à sélectionner des données de configuration actuelles parmi ladite pluralité de données de configuration ;
une section d'acquisition d'informations de fonctionnement de mémoire cache (3) destinée à acquérir des informations de fonctionnement de mémoire cache à partir des données de configuration (1) qui sont actuellement sélectionnées ; et
une section de contrôle de mémoire cache (4) destinée à contrôler le fonctionnement de la mémoire cache (5) stockant les données de configuration, en se basant sur les informations de fonctionnement de mémoire cache.

2. Processeur selon la revendication 1, dans lequel les données de configuration (1) contiennent en outre des informations d'état suivant indiquant quelles données de configuration devraient être sélectionnées ensuite, et
dans lequel lorsque les Informations de fonctionnement de mémoire cache Indiquent une opération d'anticipation, la section de contrôle de mémoire cache (4) pré-lit les données de configuration indiquées par les informations d'état suivant, et contrôle le fonctionnement de la mémoire cache (5).

3. Processeur selon la revendication 1 ou 2, dans lequel la mémoire cache (25) comprend une pluralité de registres (25aa, 25ab, 25ac).

4. Processeur selon la revendication 3, dans lequel le sélecteur (25c) peut fonctionner sous le contrôle de ladite section de contrôle de mémoire cache (4) pour sélectionner les données de configuration (1) à partir des données de configuration output parmi la pluralité de registres (25aa, 25ab, 25ac) et fournir les données de configuration sélectionnées aux circuits de traitement (2a, 2b, 2c, 2d).

5. Processeur selon la revendication 3 ou 4, dans lequel les registres (25aa, 25ab, 25ac) comprennent des bascules bistables.

6. Processeur selon l'une quelconque des revendications précédentes, dans lequel le stockage des données de configuration (1) dans la mémoire cache est contrôlé par une unité centrale (40).

7. Processeur selon l'une quelconque des revendications précédentes, dans lequel les informations de fonctionnement de mémoire cache contiennent des informations indiquant si les données de configuration (1) pour lesquelles aucune occurrence n'apparaît dans la mémoire cache doivent ou non être stockées dans la mémoire cache (5).

8. Dispositif à semi-conducteur comprenant le processeur selon l'une quelconque des revendications 1 à 7.
